# EUROPÄISCHE PATENTSCHRIFT

(11) **EP 1 571 034 B1**
(45) Veröffentlichungstag und Bekanntmachung des Hinweises auf die Patenterteilung: **17.10.2007**
(21) Anmeldenummer: 05002991.7
(22) Anmeldetag: 12.02.2005
(51) Int. Cl.: B60N 2/06, B60N 2/02, B60N 2/07

(54) **Längseinsteller für einen Fahrzeugsitz**
Longitudinal adjuster for a vehicle seat
Dispositif de réglage longitudinal pour un siège de véhicule

(30) Priorität: 04.03.2004 DE 102004010489
(43) Veröffentlichungstag der Anmeldung: 07.09.2005
(73) Patentinhaber: KEIPER GmbH & Co. KG, 67657 Kaiserslautern (DE)
(72) Erfinder: Krebs, Jürgen, 67806 Rockenhausen (DE); Strubel, Peter, 55237 Flonheim (DE); Willems, Boris, 66839 Schmelz (DE)
(74) Vertreter: Patentanwälte Hosenthien-Held und Dr. Held

(56) Entgegenhaltungen:
- DE-A1- 10 315 576
- US-A- 1 714 462

## Beschreibung

Die Erfindung betrifft einen Längseinsteller für einen Fahrzeugsitz, insbesondere für einen Kraftfahrzeugsitz, mit den Merkmalen des Oberbegriffs des Anspruches 1.

Bei einem bekannten Längseinsteller dieser Art nimmt der Bauraum in der Sitzschienenanordnung genau die Spindel, die Spindelmutter sowie einige weitere Getriebeteile auf. Für die verschiedenen Lastforderungen werden im Hinblick auf die Ausschälfestigkeit und die Längsverriegelungskraft die Bauteile entsprechend stark dimensioniert.

Aus der DE 103 15 576 A1 ist ein Längseinsteller für einen Fahrzeugsitz entsprechend dem Oberbegriff des Anspruchs 1 bekannt.

Der Erfindung liegt die Aufgabe zu Grunde, einen Längseinsteller der eingangs genannten Art zu verbessern. Diese Aufgabe wird erfindungsgemäß durch einen Längseinsteller mit den Merkmalen des Anspruches 1 gelöst. Vorteilhafte Ausgestaltungen sind Gegenstand der Unteransprüche.

Dadurch, daß der Bauraum Platz für eine zweite Spindel mit einer zweiten Spindelmutter bietet, steht eine modular aufgebaute Sitzschienenanordnung zur Verfügung, welche mittels der Anzahl der Spindeln an die erforderliche Längsverriegelungskraft angepasst werden kann. Bei niedrigeren Lastanforderungen ist nur eine Spindel eingesetzt, bei höheren zwei Spindeln. Die erste Spindel dient zur Längseinstellung, und die zweite Spindel erhöht die Längsverriegelungskraft. Die Sitzschienen sind sowohl für den Fall einer einzigen Spindel als auch für den Fall zweier Spindeln ausgelegt. Der Einsatz von einer oder zwei Spindeln hat dann keinen Einfluß auf die Schnittstelle zur Fahrzeugstruktur und zur Fahrzeugsitzstruktur, d.h. insbesondere auf die Außengeometrie und -abmessungen. Vorzugsweise ist eine solche modulare Sitzschienenanordnung auf beiden Fahrzeugsitzseiten vorgesehen, so daß auch die Anpassung an die zu erwartenden, einzuleiteten Gurtkräfte möglich ist.

Es ist vorzugsweise ein gemeinsamer Antrieb für die beider Spindeln oder Spindelmuttern jeder Sitzschienenanordnung vorgesehen. Im Hinblick auf einen solchen gemeinsamen, zumindest näherungsweise synchronen Antrieb ist die zweite Spindel vorzugsweise parallel zur ersten Spindel angeordnet und vorzugsweise auch entgegengesetzt gewunden. Wenn die Spindelmuttern angetrieben werden sollen, ist in jeder Sitzschienenanordnung vorzugsweise eine einzelne Schnecke als gemeinsamer Antrieb vorgesehen. Die Schnecke greift gemeinsam in die vorhandenen Spindelmuttern (eine oder zwei) und wird vorzugsweise von einem für beide Sitzschienenanordnungen gemeinsamen (also in der Regel für zwei Schnecken gemeinsamen) Motor angetrieben. Für einen ruhigen Lauf und zum Ausgleich von Toleranzen ist vorzugsweise ein Spiel zwischen der zweiten Spindelmutter einerseits und der Schnecke und/oder der zweiten Spindel andererseits vorgesehen. Bei einem Antrieb der Spindeln ist eine entsprechende, gemeinsame Getriebeanordnung vorgesehen.

Um insbesondere die Lastanforderungen hinsichtlich der Ausschälfestigkeit anpassen zu können, ist die Sitzschienenanordnung vorzugsweise in modularer Weise aus drei verschiedenen Gruppen von Sitzschienen kombinierbar, die dann jeweils die nächstkleinere umgreifen oder von der nächstgrößeren umgriffen werden. Dabei können die im weitesten Sinne C-förmigen Sitzschienen einer Gruppe in unterschiedlichen Ausformungen auftreten, d.h. unterschiedlich weit die C-Form nachbilden, d.h. unterschiedlich weit umgreifend ausgebildet sein. Dies wird vorzugsweise dadurch erreicht, daß die Sitzschienen einer Gruppe mit unterschiedlichen Ausformungen im gleichen Werkzeug aus unterschiedlich breiten Streifen hergestellt werden. Es ist prinzipiell auch möglich, diese modulare Weise auf einen manuell einstellbaren Längseinsteller zu übertragen.

Der erfindungsgemäße Längseinsteller ist durch den modularen Aufbau mit Spindeln und Sitzschienen vielseitig einsetzbar. Die Sitzschienenanordnungen werden vorzugsweise seitlich an Fahrzeugstruktur und Sitzteil angebracht, können aber auch in herkömmlicher Weise dem Lot folgend angebracht sein.

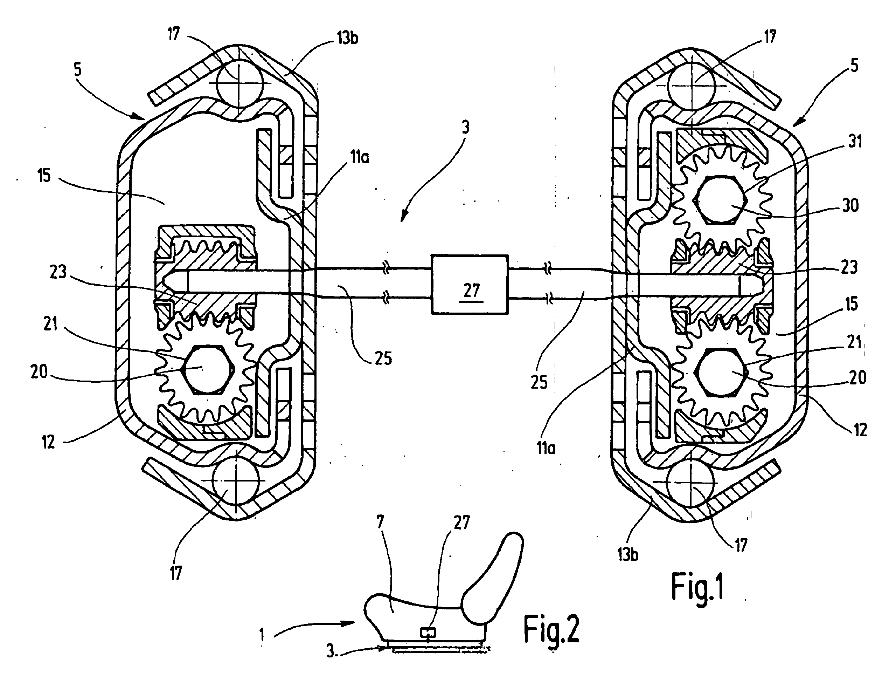

Im folgenden ist die Erfindung anhand eines in der Zeichnung dargestellten Ausführungsbeispiels näher erläutert. Es zeigen
- Fig. 1: einen Querschnitt durch das Ausführungsbeispiel, wobei die an sich runde Spindel im Schnitt unrund erscheint,
- Fig. 2: eine schematisierte Darstellung eines Fahrzeugsitzes, und

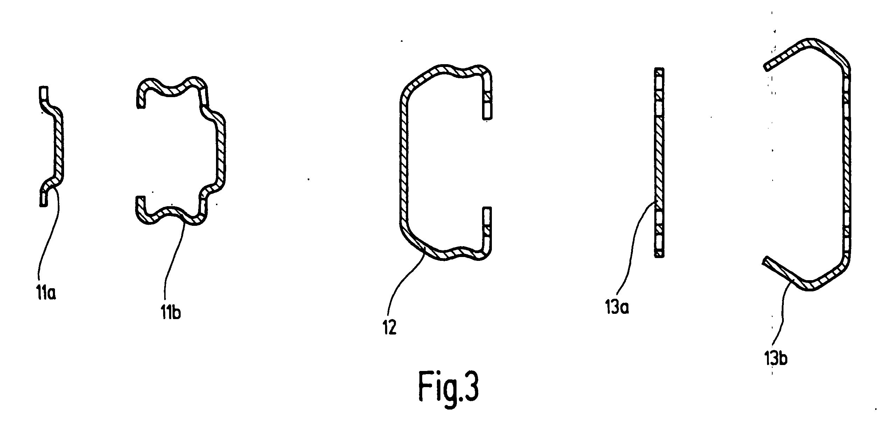

- Fig. 3: eine Darstellung verschiedener Sitzschienen in unterschiedlichen Ausformungen.

Bei einem Fahrzeugsitz 1, insbesondere einem Kraftfahrzeugsitz, ist zur Einstellung der Sitzlängsposition ein Längseinsteller 3 vorgesehen, welcher auf beiden Seiten des Fahrzeugsitzes 1 eine Sitzschienenanordnung 5 aufweist, welche einerseits mit der Fahrzeugstruktur und andererseits mit dem Sitzteil 7 des Fahrzeugsitzes 1 verbunden ist.

Jede Sitzschienenanordnung 5 umfasst vorliegend drei profilierte Sitzschienen, nämlich eine innen angeordnete erste Sitzschiene 11a, eine diese übergreifende zweite Sitzschiene 12 und eine letztere wiederum übergreifende dritte Sitzschiene 13b. Dadurch wird ein von allen Sitzschienen 11a, 12 und 13b umschlossener Bauraum 15 der Sitzschienenanordnung definiert. Die erste Sitzschiene 11a und die dritte Sitzschiene 13b sind miteinander verbunden und gemeinsam relativ zur zweiten Sitzschiene 12 in der gemeinsamen Schienenlängsrichtung verschiebbar, wobei die zweite Sitzschiene 12 und die dritte Sitzschiene 13b für eine verringerte Reibung Kugeln 17 zwischen sich aufnehmen. Vorliegend sind die zweite Sitzschiene 12 seitlich mit der Fahrzeugstruktur und die erste und dritte Sitzschiene 11a und 13b seitlich mit dem Sitzteil 7 verbunden.

Je nach Lastanforderung, insbesondere im Hinblick auf die Ausschälfestigkeit, kann die Sitzschienenanordnung 5 modular zusammengestellt werden, indem statt der im Ausführungsbeispiel gewählten, nur teilweise ausgeformten ersten Sitzschiene 11a eine vollständig ausgeformte erste Sitzschiene 11b und/oder statt der gewählten, vollständig ausgeformten dritten Sitzschiene 13b eine nur teilweise ausgeformte Sitzschiene 13a verwendet wird. Die ersten Sitzschienen 11a und 11b bzw. die dritten Sitzschienen 13a und 13b bilden jeweils eine Gruppe, wobei die Sitzschienen einer Gruppe im gleichen Werkzeug aus verschieden breiten Stahlblechstreifen hergestellt oder nachträglich beschnitten werden. Es ist auch möglich, die gewünschte Anpassung durch den Entfall der ersten Sitzschiene 11a/11b oder der dritten Sitzschiene 13a/13b vorzunehmen und/oder diese Anpassung durch die Wahl der Anzahl der Pakete von Kugeln 17 zwischen den drei möglichen Sitzschienen zu verfeinern.

Für einen motorischen Antrieb des Längseinstellers 3 ist auf beiden Fahrzeugsitzseiten innerhalb des Bauraumes 15 in Schienenlängsrichtung eine erste Spindel 20 angeordnet, welche an ihren beiden Enden mit der zweiten Sitzschiene 12 verbunden ist, also feststehend ist. Auf der ersten Spindel 20 ist eine mit dieser zusammenwirkende erste Spindelmutter 21 drehbar angeordnet, in welche eine Schnecke 23 greift. Die an der ersten und dritten Sitzschiene 11a und 13b gelagerte Schnecke 23 wird von einer Welle 25 gedreht, welche wiederum von einem gemeinsamen Motor 27 angetrieben wird.

Der Bauraum 15 ist so dimensioniert, daß im Bedarfsfall, vorliegend auf derjenigen Fahrzeugsitzseite mit dem die Gurtkräfte einleitenden Gurtschloß, der Bauraum 15 Platz für eine zweite Spindel 30 bietet, welche parallel zur ersten Spindel 20 angeordnet und ebenfalls mit der zweiten Sitzschiene 12 verbunden ist, also feststehend ist. Auf der entgegengesetzt gewundenen, zweiten Spindel 30 läuft eine zweite Spindelmutter 31, in welche die vorgenannte Schnecke 23 für einen gemeinsame, insbesondere synchronen Antrieb beider Spindelmuttern 21 und 31 greift. Um ein Verklemmen im Betrieb zu vermeiden, ist zwischen der zweiten Spindelmutter 31 einerseits und der zweiten Spindel 30 oder der Schnecke 23 andererseits ein Spiel vorgesehen. Das System der ersten Spindel 20 dient der Längseinstellung, während das System der zweiten Spindel 30 der Erhöhung der Längsverriegelungskraft dient. In Anpassung an die erforderliche Längsverriegelungskraft können die Sitzschienenanordnungen 5 in modularer Weise mit einer oder zwei Spindel zusammengestellt werden, jeweils in Kombination mit der modularen Zusammenstellung der Sitzschienen.

### Bezugszeichenliste

- 1: Fahrzeugsitz
- 3: Längseinsteller
- 5: Sitzschienenanordnung
- 7: Sitzteil
- 11a, 11b: erste Sitzschiene
- 12: zweite Sitzschiene
- 13a, 13b: dritte Sitzschiene
- 15: Bauraum
- 17: Kugel
- 20: erste Spindel
- 21: erste Spindelmutter
- 23: Schnecke
- 25: Welle
- 27: Motor
- 30: zweite Spindel
- 31: zweite Spindelmutter

## Patentansprüche

1. Längseinsteller für einen Fahrzeugsitz, insbesondere für einen Kraftfahrzeugsitz, mit wenigstens einer Sitzschienenanordnung (5), die wenigstens zwei Sitzschienen (11a, 11b, 12, 13a, 13b) umfasst, wobei eine erste Sitzschiene (11a, 11b) von einer zweiten Sitzschiene (12) übergriffen wird, wodurch ein umschlossener Baumraum (15) definiert wird und wobei die Sitzschienen motorisch angetrieben relativ zueinander verschieblich sind, wofür innerhalb des Bauraumes (15) wenigstens eine erste Spindel (20) angeordnet ist, die mit einer ersten Spindelmutter (21) zusammenwirkt, **dadurch gekennzeichnet, daß** der Bauraum (15) Platz für eine zweite Spindel (30) mit einer zweiten Spindelmutter (31) bietet.

2. Längseinsteller nach Anspruch 1, **dadurch gekennzeichnet, daß** die zweite Spindel (30) mit der zweiten Spindelmutter (31) den angebotenen Platz einnimmt.

3. Längseinsteller nach Anspruch 2, **dadurch gekennzeichnet, daß** die zweite Spindel (30) parallel zur ersten Spindel (20) angeordnet und entgegengesetzt gewunden ist

4. Längseinsteller nach einem der Ansprüche 1 bis 3, **dadurch gekennzeichnet, daß** in jeder Sitzschienenanordnung (5) eine Schnecke (23) in die vorhandenen Spindelmuttern (21, 31) greift.

5. Längseinsteller nach Anspruch 4, **dadurch gekennzeichnet, daß** zwischen der zweiten Spindelmutter (31) einerseits und der Schnecke (23) und/oder der zweiten Spindel (30) andererseits ein Spiel vorgesehen ist.

6. Längseinsteller nach Anspruch 4 oder 5, **dadurch gekennzeichnet, daß** ein gemeinsamer Motor (27) mittels zweier Wellen (25) die Schnecken (23) der beiden Sitzschienenanordnungen (5) antreibt.

7. Längseinsteller nach einem der Ansprüche 1 bis 6, **dadurch gekennzeichnet, daß** die Sitzschienenanordnung (5) in modularer Weise aus drei verschiedenen Gruppen von Sitzschienen (11a, 11b, 12, 13a, 13b) kombinierbar ist.

8. Längseinsteller nach Anspruch 7, **dadurch gekennzeichnet, daß** wenigstens eine Gruppe von Sitzschienen (11a, 11b, 12, 13a, 13b) Sitzschienen (11a, 11b, 13a, 13b) unterschiedlicher Ausformungen enthält.

9. Längseinsteller nach Anspruch 8, **dadurch gekennzeichnet, daß** die Sitzschienen (11a, 11b, 13a, 13b) einer Gruppe mit unterschiedlichen Ausformungen im gleichen Werkzeug aus unterschiedlich breiten Streifen hergestellt sind.

10. Längsverstellbarer Fahrzeugsitz mit einem Längseinsteller (3) nach einem der Ansprüche 1 bis 9.

## Claims

1. Longitudinal adjuster for a vehicle seat, in particular a motor vehicle seat, having at least one seat rail assembly (5), which comprises at least two seat rails (11a, 11b, 12, 13a, 13b), wherein a second seat rail (12) engages over a first seat rail (11a, 11b), thereby defining an enclosed installation space (15), and wherein the seat rails are motor driven and displaceable relative to one another, for which purpose within the installation space (15) there is located at least one first spindle (20) that co-operates with a first spindle nut (21), **characterised in that** the installation space (15) provides space for a second spindle (30) with a second spindle nut (31).

2. Longitudinal adjuster according to Claim 1, **characterised in that** the second spindle (30) with the second spindle nut (31) occupies the provided space.

3. Longitudinal adjuster according to Claim 2, **characterised in that** the second spindle (30) is positioned parallel to the first spindle (20) and is wound in the opposite direction.

4. Longitudinal adjuster according to any one of Claims 1 to 3, **characterised in that** in every seat rail assembly (5), a worm gear (23) engages in the spindle nuts (21, 31) present.

5. Longitudinal adjuster according to Claim 4, **characterised in that** a clearance is provided between the second spindle nut (31) on the one hand and the worm gear (23) and/or the second spindle (30) on the other hand.

6. Longitudinal adjuster according to Claim 4 or 5, **characterised in that** a common motor (27) drives the worm gears (23) of the two seat rail assemblies (5) by means of two shafts (25).

7. Longitudinal adjuster according to any one of Claims 1 to 6, **characterised in that** the seat rail assembly (5) is combinable in a modular way from three different groups of seat rails (11a, 11b, 12, 13a, 13b).

8. Longitudinal adjuster according to Claim 7, **characterised in that** at least one group of seat rails (11a, 11b, 12, 13a, 13b) contains seat rails (11a, 11b, 13a, 13b) of different mouldings.

9. Longitudinal adjuster according to Claim 8, **characterised in that** the seat rails (11a, 11b, 13a, 13b) of one group having different mouldings are produced in the same tool from strips of differing width.

10. Longitudinally adjustable vehicle seat having a longitudinal adjuster (3) according to any one of Claims 1 to 9.

## Revendications

1. - Dispositif de réglage en longueur pour un siège de véhicule, en particulier pour un siège de véhicule automobile, comportant au moins un arrangement de rails de siège (5), qui comprend au moins deux rails de siège (11a, 11b, 12, 13a, 13b), à l'occasion de quoi un premier rail de siège (11a, 11b) est enjambé par un deuxième rail de siège (12), ce par quoi un espace de construction (15) enfermé est défini et à l'occasion de quoi les rails de siège sont aptes à se déplacer en translation l'un par rapport à l'autre par une commande motorisée, ce pour quoi à l'intérieur de l'espace de construction (15) est disposée au moins une première broche (20) qui coopère avec un premier écrou de broche (21), **caractérisé par le fait que** l'espace de construction (15) offre de la place pour une deuxième broche (30) avec un deuxième écrou de broche (31).

2. - Dispositif de réglage en longueur selon la revendication 1, **caractérisé par le fait que** la deuxième broche (30) avec le deuxième écrou de broche (31) prend la place offerte.

3. - Dispositif de réglage en longueur selon la revendication 2, **caractérisé par le fait que** la deuxième broche (30) est disposée parallèlement à la première broche (20) et est amenée à tourner dans le sens opposé.

4. - Dispositif de réglage en longueur selon l'une des revendications 1 à 3, **caractérisé par le fait que**, dans chaque arrangement de rails (5), s'engrène une vis (23) dans les écrous de broche présents (21, 31).

5. - Dispositif de réglage en longueur selon la revendication 4, **caractérisé par le fait qu'**entre le deuxième écrou de broche (31) d'une part et la vis (23) et/ou la deuxième broche (30) d'autre part est prévu un jeu.

6. - Dispositif de réglage en longueur selon l'une des revendications 4 ou 5, **caractérisé par le fait qu'**un moteur commun (27) entraîne au moyen de deux arbres (25) les vis (23) des deux arrangements de rails de siège (5).

7. - Dispositif de réglage en longueur selon l'une des revendications 1 à 6, **caractérisé par le fait que** l'arrangement de rails de siège (5) est combinable d'une manière modulaire à partir de trois différents groupes de rails de siège (11a, 11b, 12, 13a, 13b).

8. - Dispositif de réglage en longueur selon la revendication 7, **caractérisé par le fait qu'**au moins un groupe de rails de siège (11a, 11b, 12, 13a, 13b) contient des rails de siège (11a, 11b, 13a, 13b) de formations différentes.

9. - Dispositif de réglage en longueur selon la revendication 8, **caractérisé par le fait que** les rails de siège (11a, 11b, 13a, 13b) d'un groupe avec des formations différentes sont fabriqués dans le même outillage à partir de bandes de largeurs différentes.

10. - Siège de véhicule réglable en longueur par un dispositif de réglage en longueur (3) tel que défini à l'une des revendications 1 à 9.
